# EUROPEAN PATENT APPLICATION

(11) **EP 4 838 975 A1**
(43) Date of publication of application: **11.11.2026**
(21) Application number: 25175301.8
(22) Date of filing: 09.05.2025
(51) Int. Cl.: H04W 72/04, H04L 5/00, H04W 4/70, H04W 74/0833

(54) **INTERNET OF THINGS DEVICE AND READER**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KANG, Yang, 469332 Singapore (SG)
(74) Representative: Grünecker Patent- und Rechtsanwälte PartG mbB

(57) **Abstract**

The present disclosure relates to an Internet of Things, loT, device comprising the following. A transceiver of the loT device receives, from a reader, a first message including first resource assignment information and a second message including second resource assignment information. A circuitry of the loT device determines at least one resource assigned to the loT device for scheduling a signal transmission from the loT device, wherein the circuitry determines the at least one assigned resource based on the first resource assignment information and the second resource assignment information. The present disclosure further relates to a reader communicating with the loT device and to corresponding methods.

## Description

### FIELD OF THE PRESENT DISCLOSURE

The present disclosure is directed to methods, devices and articles in communication systems, such as 3GPP communication systems.

### TECHNICAL BACKGROUND

The Internet of things (IoT) market is a major source of revenue for future wireless technology and is a steadily growing market. Building, commercial, health, agriculture, infrastructure, and industries are some of the key sectors targeted by the IoT market. Energy harvesting technology is a key to the success of the IoT market as it can considerably reduce device operational costs. Ambient IoT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient IoT (A-IoT) devices in communication networks, particularly, 5G and future technologies, is an important demanding task, particularly, since A-IoT devices lack RRC states and ARQ and HARQ transmission protocols that ensure reliable data delivery, A-IoT devices have limited power available resulting in reduced time periods of communication capability and A-IoT devices are configured with specifically designed new operation states.

### Summary

One non-limiting and exemplary embodiment facilitates providing an Internet of Things, IoT, device to perform an improved IoT communication procedure.

In an embodiment, the techniques disclosed here feature an Internet of Things, IoT, device comprising the following. A transceiver of the IoT device receives, from a reader, a first message including first resource assignment information and a second message including second resource assignment information. A circuitry of the IoT device determines at least one resource assigned to the IoT device for scheduling a signal transmission from the IoT device, wherein the circuitry determines the at least one assigned resource based on the first resource assignment information and the second resource assignment information.

In another embodiment, the techniques disclosed here feature a reader, comprising the following. A circuitry of the reader assigns at least one resource to an Internet of Things, IoT, device, for scheduling a signal transmission from the IoT device. The circuitry generates a first message including first resource assignment information and a second message including second resource assignment information, wherein at least one of the first resource assignment information or the second resource assignment information indicate at least one assigned resource to the IoT device. A transceiver of the reader transmits the first message and the second message to the IoT device.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system;
- **Fig. 2**: illustrates a first topology of an IoT communication between a base station and an loT device;
- **Fig. 3**: illustrates a second topology of an IoT communication between a base station and an loT device, with an intermediate node;
- **Fig. 4**: illustrates an exemplary implementation of a D2R transmission in the first topology of Fig. 2;
- **Fig. 5**: illustrates an exemplary implementation of a D2R transmission in the second topology of Fig. 3;
- **Fig. 6**: illustrates an exemplary implementation of D2R and R2D transmissions in the second topology of Fig. 3;
- **Fig. 7**: illustrates an access procedure, including the message exchange, between an IoT device and a reader, wherein the access procedure comprises different operations, such as the random access procedure, the inventory operation, and the command-response operation;
- **Fig. 8**: illustrates an exemplary resource assignment for the access procedure;
- **Fig. 9**: illustrates another exemplary resource assignment procedure and a possible drawback;
- **Fig. 10**: illustrates an exemplary and simplified structure of an IoT device and a reader;
- **Fig. 11**: illustrates a simplified and exemplary IoT device structure according to a basic implementation of the improved resource allocation procedure;
- **Fig. 12**: is a sequence diagram for an exemplary IoT device behaviour in line with the loT device of Fig. 11;
- **Fig. 13**: illustrates a simplified and exemplary reader structure according to an exemplary implementation of the improved resource allocation procedure;
- **Fig. 14**: is a sequence diagram for an exemplary reader behaviour in line with the node of Fig. 13;
- **Fig. 15**: illustrates a first exemplary implementation of a First Solution of the improved resource allocation procedure;
- **Fig. 16**: illustrates a second exemplary implementation of the First Solution of the improved resource allocation procedure;
- **Fig. 17**: illustrates a first exemplary implementation of a Second Solution of the improved resource allocation procedure;
- **Fig. 18**: illustrates a second exemplary implementation of the Second Solution of the improved resource allocation procedure;
- **Fig. 19**: illustrates a third exemplary implementation of the Second Solution of the improved resource allocation procedure;
- **Fig. 20**: is a sequence diagram for an exemplary IoT device behavior in the third exemplary implementation of the Second Solution of the improved resource allocation procedure;
- **Fig. 21**: illustrates an exemplary implementation of a Third Solution of the improved resource allocation procedure;
- **Fig. 22**: illustrates an exemplary implementation of a Fourth Solution of the improved resource allocation procedure;
- **Fig. 23**: illustrates an exemplary implementation of a Fifth Solution of the improved resource allocation procedure;
- **Fig. 24**: shows exemplary functional split options in 5G open-radio access network (O-RAN).

### DETAILED DESCRIPTION

### 5G NR system architecture and protocol stacks

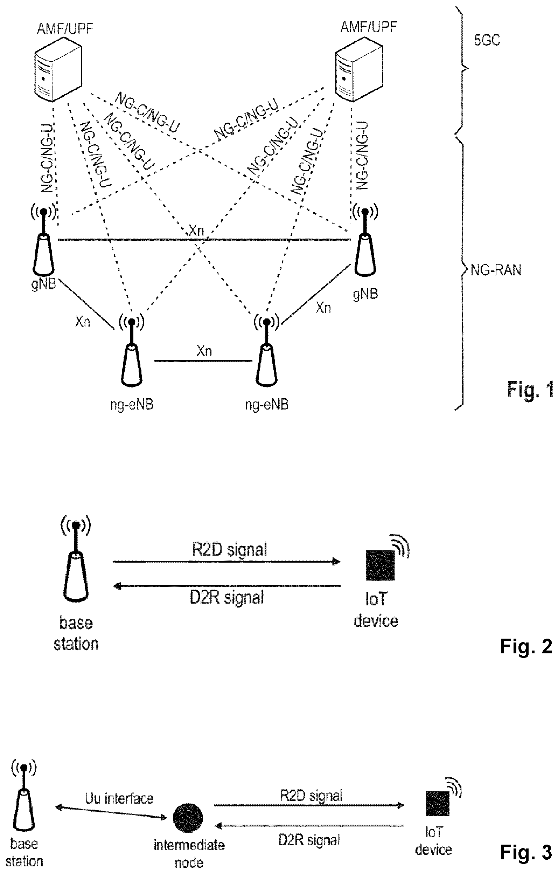

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### Ambient IoT Device

An ambient Internet of Things device (A-IoT device) is a new type of device, introduced to be supported by 5G NR or possible later generation (e.g. 6G) technology. A-IoT devices can be understood as IoT devices that have the ability to harvest energy from natural or ambient sources, such as vibration, light, heat or a carrier wave (CW), e.g. provided by the base station, or the intermediate node, or a separate CW node. The energy harvesting technology can be crucial for the IoT market to reduce the device operation costs. The power consumption and complexity of A-IoT devices can be less compared to existing 3GPP technologies, such as MTC (machine type communication), NB-IoT (NarrowBand IoT), or RedCap (Reduced Capability). For instance, an ambient IoT device can be operated with a small battery or without a battery and further may not require battery replenishment. Another term is "zero energy device", due to their capability to operate without a dedicated battery source. An A-IoT device may be an ultra-low-complexity device with ultra-low power consumption for very-low end IoT applications. Examples for A-IoT devices include - without any limitation - wearables, smart home devices, automotive devices, sensors, smart keys, healthcare devices, etc.

A-IoT devices may lack RRC states, such that new specifically designed operation states may have to be defined and configured for A-IoT devices. ARQ (Automatic Repeat Request) and Hybrid ARQ transmission protocols that ensure reliable data delivery may not be supported by A-IoT devices. A-IoT devices have limited power available, resulting in reduced time periods of communication capability. Further, full device registration with the network might be difficult for IoT devices, although a simplified registration or identification might be necessary.

A-IoT devices may not support mobility (e.g. no cell selection/re-selection/handover functions, as in legacy NR).

The above characteristics of an A-IoT device facilitates the wide deployment of the devices for various applications. The integration of A-IoT devices into 5G and future technologies poses a demanding problem that is addressed in the present disclosure.

Importantly, it is noted that the present disclosure is not limited to A-IoT devices, but may also be applicable to any other IoT devices (e.g. other types, such as Critical loT, Massive loT, Broadband IoT, Narrow-Band IoT etc.) or even more generally to other devices that benefit from the improvements of the present disclosure. For example, the terms IoT device and A-IoT device are used interchangeably in this disclosure; alternatively, the terms low-power-consumption device or low-complexity transceiver device could be used instead as well.

More details on use cases, deice constraints and performance requirements as well as KPIs (Key Performance Indicators) can be obtained from the document 3GPP TR 22.840 v19.0.0.

### A IoT Topologies

Two different topologies are exemplarily considered in this disclosure for the IoT communication between the IoT device and the network. However, the present disclosure applies to other topologies as well. In the following, a node communicating with an IoT device, for example, receiving data from or transmitting data to the IoT device, may be also referred to as a reader. The reader can be e.g. a base station, or a UE etc.

In a first topology as illustrated in **Fig. 2****,** an IoT device directly and bidirectionally communicates with a reader (such as a base station) over a wireless channel. The communication may include transmitting and/or receiving signals that may carry data information or control information. The data information may include e.g. user data, such as measurements performed by the IoT device. The control information can be signaling information or signals such as control signals, reference signals or the like. In a further variant, not explicitly illustrated in Fig. 2, the direct communication with the base station may further include communication via one or more distributed units, DU, of the base station. A base station may operate one or more cells.

In a second topology as illustrated in **Fig. 3****,** an IoT device bidirectionally communicates with an intermediate node that is located between the IoT device and the base station. The intermediate node could be for instance a User Equipment, an Integrated Access and Backhaul (IAB) node, a relay, a Network-Controlled Repeater (NCR) or any other suitable entity that supports IoT. The intermediate node is connected to both the base station and the IoT device and transfers the communication between the IoT device and the base station. The base station may communicate with the intermediate node via a first interface, exemplified in Fig. 3 as the Uu interface (e.g. corresponds to UE - gNB interface in 5G NR). The intermediate node may communicate with the IoT device via a second interface. The present disclosure is not limited to any specific interface definition. In general, the first and second interfaces in Fig. 3 may e.g. be both wireless interfaces.

For any topology in general, the reader is an equipment that directly communicates with the A-IoT device, in the first topology the reader is a base station, and in the second topology the reader is an intermediate node (e.g. UE). Communication channels between the A-IoT reader and A-IoT device are herein referred to as reader to device (R2D) for data transmissions from reader to device, and device to reader (D2R) for data transmissions from device to reader. Further, in any topology in general, traffics may be A-IoT device terminated (DT) or A-IoT device originated - device terminated triggered (DO-DTT).

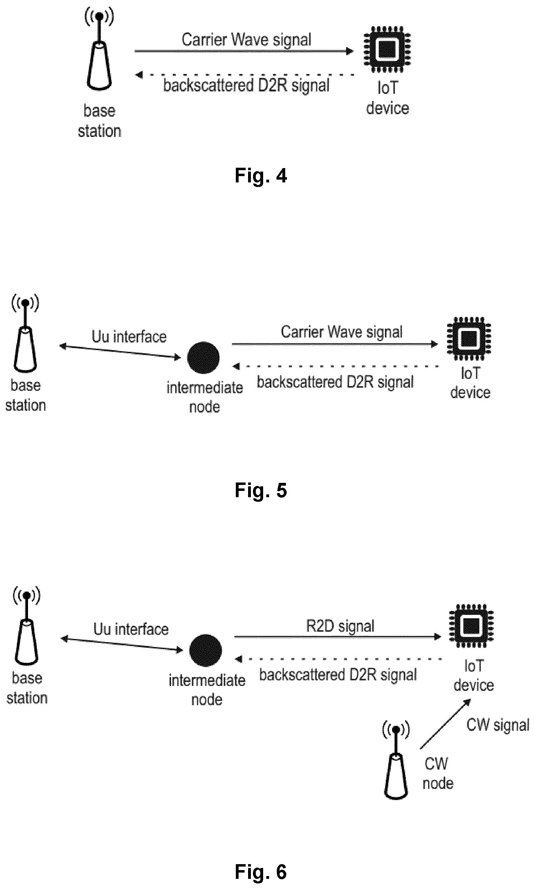

**Fig. 4** illustrates an exemplary implementation of a D2R transmission in the first topology of Fig. 2, where the base station functions as the reader and generates the Carrier Wave, CW, signal for the IoT device. The base station transmits the CW signal to the IoT device, and the IoT device may backscatter and modulate the CW signal to generate the backscattered signal as the D2R signal.

Correspondingly, **Fig. 5** illustrates an exemplary implementation of a D2R transmission in the second topology of Fig. 3, where the intermediate node (e.g. a UE) functions as a reader and generates the CW signal for the IoT device. The intermediate node transmits the CW signal to the IoT device, and the IoT device may backscatter and modulate the CW signal to generate the backscattered signal as the D2R signal.

**Fig. 6** illustrates an exemplary implementation of D2R and R2D transmissions in the second topology of Fig. 3, where an intermediate node (e.g. a UE) functions as a reader. To generate the R2D signal, the intermediate node generates the carrier wave signal, which is then modulated by the intermediate node to generate the R2D signal. The CW signal is generated by a CW node, which is arranged separately from the intermediate node, and is transmitted to the IoT device. The loT device backscatters the CW signal to generate the backscattered signal as the D2R signal, which is transmitted to the UE.

### IoT Communication

Communication by IoT devices covers both active transmission as well as passive backscattering. In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering devices. For example, in the D1T1-B scenario, the carrier wave for R2D transmissions is provided by a separate node.

Energy-efficient communication is one key aspect for Ambient IoT devices. In said respect, an On-Off-Keying (OOK) line coding scheme can be used as a modulation technique for IoT communication in 3GPP 5G and future (e.g. 6G) communication systems, due to its simplicity and energy efficiency.

Depending on R2D or D2R communication, various limitations may be set. For example, Time Division Multiple Access (TDMA) may be supported for R2D communication, while TDMA and Frequency Division Multiple Access (FDMA) may be supported for D2R communication. Further, R2D communication may support only OOK-4 modulation, and one solution for Cyclic Prefix (CP) handling. D2R backscattering may support only OOK and Binary Phase Shift Keying (BPSK) modulations. R2D communication may support only the Manchester line code as discussed in TR 38.769 V. 19.0.0. D2R communication may support the Manchester line code or no line code (e.g. configured/indicated by the reader). Additionally, D2R communication may support a corresponding small frequency shift method according to the options in TR 38.769 V. 19.0.0. R2D communication may not support Forward Error Correction (FEC). D2R communication may support only convolutional code with generator polynomials as per TS 36.212 V 18.1.0. Additional other generator polynomials may be considered.

For R2D communication the PRDCH (Physical Reader-to-Device Channel) may be used as (physical) communication channel, and for D2R communication the PDRCH (Physical Device-to-Reader Channel) may be used as (physical) communication channel. Both channels may support transmission without Cyclic Redundancy Check (CRC), and with CRC as per the generator polynomials in TS 38.212 V 18.5.0. Alternatively, other generator polynomials may be considered, such as 6-bit CRC and 16-bit CRC.

D2R and R2D communication may or may not support physical layer repetition transmission. The transport block size (TBS) for the R2D and D2R communication may be limited, for example to 1000 bits.

### Initiating IoT Communication

For initiating DO-DTT traffic, the reader sends a paging signal followed by R2D Msg1 trigger signals to trigger loT device(s) to perform a random-access (RA) procedure.

No agreements have been reached in view of a proceeding with a down selection for the various types of accesses, e.g. including a 2-step random access, a 3-step random access, and a Contention-Free Random Access (CFRA). Further, a unified design could be used where at least 3-step and 2-step procedures are specified.

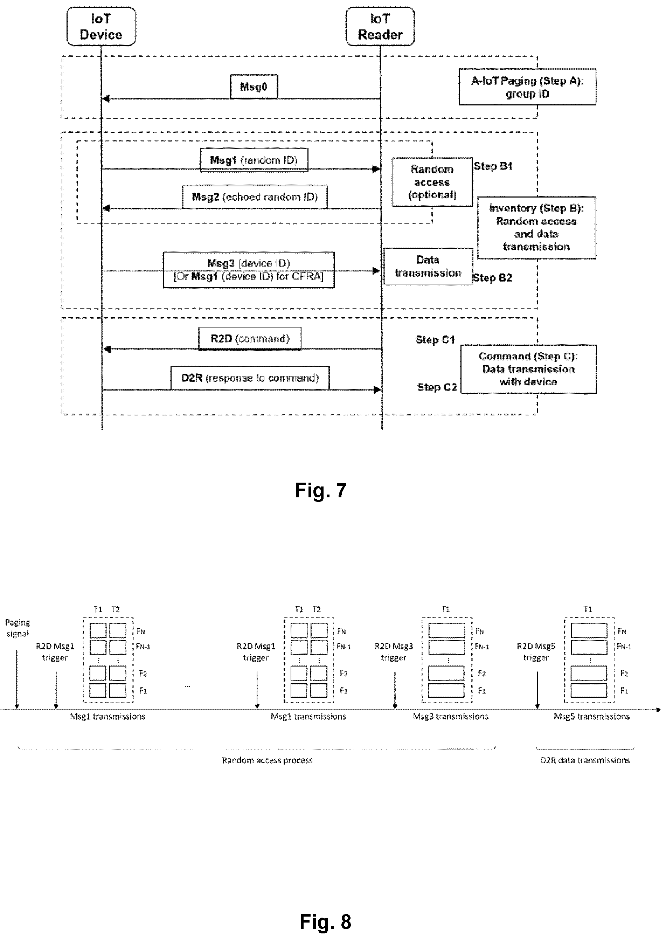

Different options on how to perform the initial access procedure will be explained in connection with **Figs. 7 and 8****,** which illustrates the message exchange between the IoT device and reader and an exemplary resource assignment for the IoT device. Fig. 7 illustrates the IoT paging in a Step A, subsequently the inventory (Step B), and then the Command-Response (Step C).

In more detail, Step A of Fig. 7 illustrates the IoT paging. The reader, here in the role of a paging entity (e.g., based on a service request from the core network, CN) sends an IoT paging signal (also termed "paging message" or "Msg0"), triggering one or more IoT devices to respond. In one example, the one or more paging signals required to complete the service request from the core network can be defined as one transaction. A subsequent transaction may be triggered by another service request from the CN.

In the example of Fig. 7, the initial paging is based on a group ID, which could be included in Msg0; thus, the paging is addressed to the loT devices that belong to said paged group assigned with the group ID. However, it is not necessary that the paging is based on a group ID, and other schemes may be equally possible (e.g., ID of a single IoT device or the initial trigger message may not comprise any specific identification, in which case any and all IoT devices that receive the initial trigger message could respond).

The inventory procedure of Step B includes the data transmission (e.g. including the device ID) and before that may optionally include a Random access procedure between the reader and the device. Assuming a Contention-Based Random Access (CBRA), a random access has to be performed by the IoT device with the reader, wherein the loT device transmits a Msg1 with a random ID, and the reader echoes the received random ID in a Msg2 (e.g., including the same received ID in Msg2). For instance, the random ID is generated by the loT device (e.g. it may be generated randomly or generated based on the IoT device ID) in response to the initial trigger message (Msg0). Here, at least a 3-step random access is currently envisioned for Rel-19, while Rel. 20 or future releases may introduce shorter formats, e.g. 2-step. The Msg2 may optionally include further information, such as information on the resource assignment (e.g. time and/or frequency resources) for the IoT device to transmit subsequent Msg3. Especially, the Msg2 may function as a R2D Msg3 trigger signal or R2D Msg3 trigger message. Communicating the Msg2 can be seen as being part of step B.

As illustrated in **Fig. 8****,** the paging signal (or paging message) Msg0 and the R2D Msg1 trigger signal (or "R2D Msg1 trigger message") allocate time and frequency resources to the paged IoT device(s). Hereby, it is considered that the paged IoT device(s) randomly select(s) one of the allocated time and frequency resources for the Msg1 transmission. Especially, it is considered that the paging signal and/or the triggering signal includes a 1-bit indication to indicate a value of X (e.g. one when X = 1 or two when X = 2) time domain resource(s) allocated to the paged IoT device(s) for the Msg1 transmission(s). Further, it is considered that from the perspective of the paged IoT device(s), the starting time for the first Msg1 time domain resource is a first offset time T_{offset1} after the end of the corresponding R2D transmission (e.g. the paging signal or the R2D Msg1 trigger signal) triggering the random access operation.

For the contention-based random access, an IoT device considers the contention resolution as successful, if the Msg2 is received including the same random ID it transmitted to the reader in Msg1. Communicating the Msg3 can be seen as being part of step B.

In a contention-free random access (CFRA) scenario, the random access can be skipped.

Turning back to Fig. 7, the second part of Step B (Step B2) includes the D2R data transmission, in which the loT device sends a device ID in a D2R message, as part of the inventory procedure. For CBRA, this message is sequentially called as Msg3, while for CFRA the D2R message can be called Msg1 sequentially after the paging message Msg0. The device ID can be expected to uniquely identify the IoT device at least within the 3GGP system. Optionally, the D2R message (e.g. Msg1 or Msg3) may further include any other upper-layer data (e.g. as requested by Msg2 or depending on the upper-layer request).

For Step C (Command and Response), the reader may send a command, which may be called "R2D Msg5 trigger signal" (or "R2D Msg5 trigger message"), to the triggered IoT device (Step C1), and the IoT device may respond to the corresponding command triggered by the reader (Step C2) by transmitting its own data in one or more D2R message(s), which may be called Msg5 message(s) in a CBRA scenario or Msg3 message(s) in a CFRA scenario.

As illustrated in Fig. 8, in the CBRA scenario the reader assigns time and frequency resources to the IoT device(s) for the transmission of the Msg3 message(s). For this purpose, the IoT device(s) are addressed in the R2D Msg3 trigger signal. Similar, for the transmission(s) of the Msg5, the reader assigns time and frequency resources to the IoT device(s) addressed in the R2D Msg5 trigger signal. Hereby, it is considered that the reader may schedule single IoT devices or multiple loT devices for Msg 3 or Msg5 transmission(s) by one R2D message (e.g. by one R2D Msg3 trigger signal or by one R2D Msg5 trigger signal).

In some implementations, for scheduling a Msg3 transmission, the reader may transmit a common Msg2 (or R2D Msg3 trigger signal) addressed to two (or more) IoT devices in response to receiving two (or more) Msg1s. The common Msg2 may assign different frequency resources (FDMA resources) to the two (or more) IoT devices, so that the IoT devices may transmit the Msg3 frequency multiplexed at a same transmission time (TDMA resource). In other implementations, the reader may transmit separate Msg2s (or R2D Msg3 trigger signals) addressed to respectively one IoT device in response to receiving two (or more) Msg1s. The separate Msg2s may assign different frequency resources (FDMA resources) and optionally different time resources (TDMA resources) to the two (or more) IoT devices, so that the IoT devices may transmit the Msg3 frequency multiplexed at a same transmission time (in a same TDMA resource) or at different transmission times (in different TDMA resources).

At present, RAN2 has agreed to support two types of procedures for Release 19: "inventory only" and "inventory and command". The procedure with steps A and B of Fig. 7 may be termed as "inventory-only" use case, while the procedure with steps A, B, and C of Fig. 7 may be termed "inventory and command".

### Further Improvements

In view of the above, an agreement has been reached to support FDMA for scheduling frequency-multiplexed D2R transmissions, including Msg1, Msg3 and Msg5 transmissions. As set out above, for CBRA scenarios, a single R2D Msg1 trigger signal can be sent by the reader for indicating one (e.g. when X = 1) or two (e.g. when X = 2) time resources (e.g. TDMA resources) for the D2R Msg1 transmissions of paged IoT device(s). In such scenarios, an IoT paging signal related to the R2D Msg1 trigger signal can accommodate all the intended frequency resources (FDMA resources) for the paged IoT device(s), as the actually used frequency resources for the Msg1 transmission are randomly selected by the paged IoT device(s).

With the remaining R2D trigger signals, including the CFRA Msg1 trigger signal triggering the CFRA Msg1 transmission(s), the Msg3 triggering signal triggering the Msg3 transmission(s), and the Msg5 triggering signal triggering the Msg5 transmission(s), the reader may only indicate a single time resource (e.g. TDMA resources) for the corresponding D2R message transmissions. Furthermore, since such R2D trigger signals may include the device identifiers (IDs) for addressing the included resource assignment individually to the corresponding IoT devices, a single one of such R2D trigger signals may not be able to accommodate all resource assignments for the corresponding IoT devices.

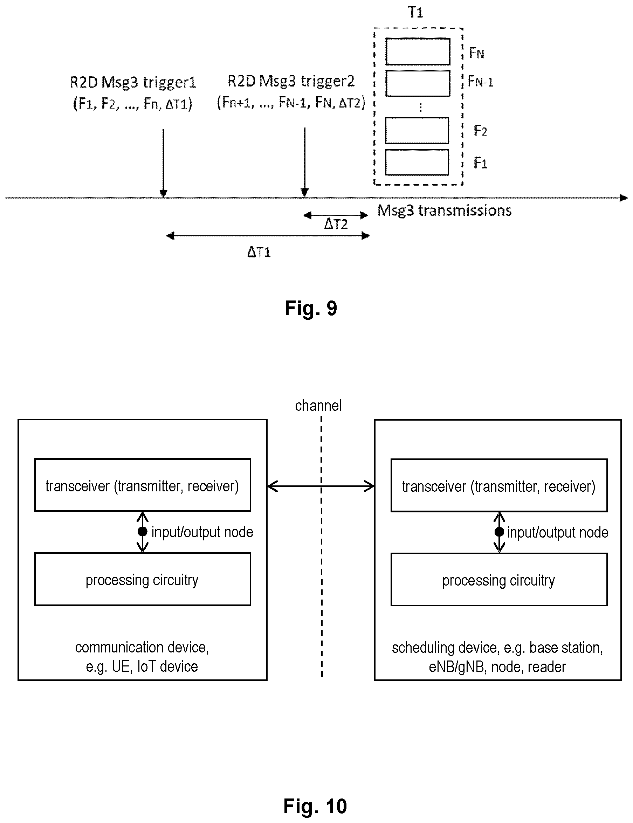

Consequently, to fully utilize the existing frequency resources, the reader may send more than one R2D trigger message to the corresponding IoT device(s) as illustrated in the example of **Fig. 9** by R2D Msg3 trigger1 indicating allocations for frequency resources F1 - Fn, and Msg3 trigger2 indicating allocations for frequency resources Fn+1 - FN for the Msg 3 transmission(s). However, sending of more than one R2D trigger message may impose carrying additional time related information by the R2D trigger messages, to indicate when the D2R transmissions should be initiated. Moreover, the indication of the time related information may need to cover several values (e.g., ΔT1 and ΔT2 in Fig. 9) to consider the length and number of the later resource allocation(s) before the start of the transmission, which adds more overhead of the signaling. Furthermore, the reader would be required to calculate the length of later scheduling information (e.g., included in R2D Msg3 trigger2 in Fig. 9) already at the time of transmitting the first scheduling information (e.g., included in R2D Msg3 trigger1 in Fig. 9), which add complexity of the reader. In addition, the devices that obtain frequency resource allocations from an earlier trigger signal (e.g., R2D Msg3 trigger1 in Fig. 9) would be required to count longer before transmitting the intended message. This could increase the IoT device complexity, since the maximum counting value and accuracy of counting are limited for low-cost A-IoT devices.

The inventors thus have identified the possibility to define an improved IoT resource assignment procedure and parts thereof, which facilitate meeting the above needs and avoiding one or more of the above described disadvantages. The present invention relates to different solutions and variants for such an improved IoT resource assignment procedure performed between a reader and an IoT device.

### Solutions

In the following solutions, IoT devices, nodes, integrated circuits and respective methods are provided for the improved IoT resource assignment procedure to facilitate meeting the above needs. The present disclosure addresses the integration of IoT devices into communication networks, particularly, according to 5G communication systems or future (e.g. 6G) communication systems. In particular, while 3GPP is currently developing Rel. 19 of the 5G (-Advanced) mobile communication system, 3GPP has already started planning for the next generation, 6G, of communications systems.

Different implementations and variants of the improved IoT resource assignment procedure will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term "**IoT device**" covers any IoT devices (such as Ambient IoT, Critical IoT, Massive IoT, etc.) but also other devices with possibly power or processing limitations. Correspondingly, the present disclosure is not limited to A-IoT devices mentioned above, but may also be applicable to any other IoT devices (e.g. other types, such as Critical IoT, Massive IoT, Broadband IoT, Narrow-Band IoT etc.) or even more generally to other devices that benefit from the improvements of the present disclosure. For example, the terms IoT device and A-IoT device are used interchangeably in this disclosure; alternatively, the term low-power-consumption device or low-complexity transceiver device could be used instead as well. Examples for A-IoT devices include - without any limitation - wearables, smart home devices, automotive devices, sensors, smart keys, healthcare devices, etc.

The term "**reader**" refers to an entity communicating with an A-IoT device and, for example, receiving information from or transmitting information to the A-IoT device; it may be also referred to as a "node". The "node/reader" can be e.g. a base station, or a UE or an intermediate node etc.

As used herein, the term "**message**" specifically refers to a formatted and standardized signal unit, which carries encapsulated information, like control information and payload data, between devices or systems within a network. In this context, for example, a message including paging information may also be referred to as "paging message" or "paging signal", a message including (frequency) resource assignment information may also be referred to as "(frequency) resource assignment message" (or "(frequency) resource allocation message") being part of a "(frequency) resource assignment signal" (or "(frequency) resource allocation signal"), and a message including trigger information may also be referred to as "trigger message" being part of a "trigger signal". Hereby, one or more message(s) can form a signal (e.g. the signal includes one message or a plurality of messages), used for a specific action or process, e.g. an resource assignment process, for example to indicate resources assigned by a reader to one IoT device or a group of IoT devices for signal transmission.

The term "**signal transmission**" refers to the transmission of one transmission message or a plurality of transmission messages from the loT device to the reader (so that the same message(s) may be seen as "reception messages" of a "signal reception" from the reader perspective). For example, in the contention-based random access (CBRA) procedure, the transmission message(s) may include at least one of Msg1, Msg3, and Msg5, where Msg1 and Msg 3 are defined for the RA procedure and Msg5 is defined for data transmission between the loT device and the reader. For example, in the contention-free random access (CBRA) procedure, the transmission message(s) may include at least one of Msg1, and Msg3, where Msg1 is defined for the RA procedure and Msg3 is defined for data transmission between the IoT device and the reader.

The term "**assigning a resource**" involves allocating a resource, like a frequency resource (or "FDMA" resource) and/or a time resource (or "TDMA resource") to the IoT devices, to ensure a proper resource utilization of the available communication spectrum. Especially, the "resource assignment" provided by the reader aims in allowing a plurality of IoT devices to perform frequency-multiplexed communication with the reader in dedicated frequency channels allocated to each of the plurality of IoT devices individually (or as a group).

**Fig. 10** illustrates a general, simplified and exemplary block diagram of an IoT device (as an example of a communication device) and a node (as an example of a scheduling device, could be also a base station, intermediate node connected to a base station, a CW node or a reader) forming a communication system. In the following, it is exemplarily assumed that the node is a reader.

The communication device (IoT device) may comprise a transceiver and circuitry. The transceiver in turn may comprise and/or function as a receiver and a transmitter. The circuitry (e.g. processing circuitry) may be one or more pieces of hardware such as one or more processors or any LSIs. Between the transceiver and the circuitry there is an input/output point (or node) over which the circuitry, in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The term "transceiver" is used for hardware and/or software components that allow the communication device, and the scheduling device, to transmit and/or receive radio signals over the (wireless) channel, for example, a physical wireless channel. The transceiver, functioning as a transmitter, may be responsible for performing the process of transmitting and other processes related thereto. The transceiver, functioning as a receiver, may be responsible for performing the process of receiving and other processes related thereto, such as monitoring a channel. The transceiver may perform processes and operations, such as transmitting and/or receiving signals, as described with respect to the solutions of this disclosure.

The circuitry may implement control tasks such as controlling the transceiver to transmit user data and control data provided by the circuitry and/or receive user data and control data, which is further processed by the circuitry. The circuitry may also be responsible for performing other processes such as determining, deciding, calculating, measuring, etc. Moreover, the term "circuitry" can also be exemplarily implemented by processing circuitry formed by one or more processors or processing units, etc. The circuitry may perform any processes and operations, such as determinations, as described with respect to the solutions of this disclosure.

The IoT device and the reader (e.g., base station) are communicating with each other over a (wireless) physical channel, respectively, using their transceivers. The reader and the IoT device are capable of transmitting as well as receiving radio signals via the channel. Together, the reader and the IoT device form a communication system, for example, a 5G or future communication system. The communication system may further include other entities such as further base stations, intermediate nodes, reader and/or IoT devices. Any of the solutions may be implemented in the IoT device, the base station, the reader and/or communication system where appropriate.

Moreover, it is noted that the IoT device as described in any of the solutions of this disclosure may be integrated on or as an integrated circuit (IC). Moreover, the integration does not necessarily include the entire transceiver. The transceiver is, in general, not necessarily a part of the IoT device or the integrated circuit. The IoT device may be connected to an external transceiver (module, optionally including an antenna) connected to the IoT device over a port on the IoT device. A similar structure applies to the reader, which can also be integrated on or as an integrated circuit (IC).

Moreover, a computer program is provided including code instructions storable on a non-transitory medium, which when executed on one or more processors, causes the one or more processors to execute a method according to any of the solutions of this disclosure.

The present disclosure relates to different solutions (and respective implementations and variants) of an improved IoT resource assignment procedure. Improved IoT devices (such as UEs), improved network devices (e.g. reader) and improved integrated circuits are presented in connection therewith, which participate separately or together in the improved procedures. In the following, although an IoT device is used for the description as an example for the communication device, the description is equally applicable to a communication device. Corresponding methods for the communication device behavior and the reader behavior are provided as well. The integrated circuits may correspond to the IoT device and reader, and respectively their behavior.

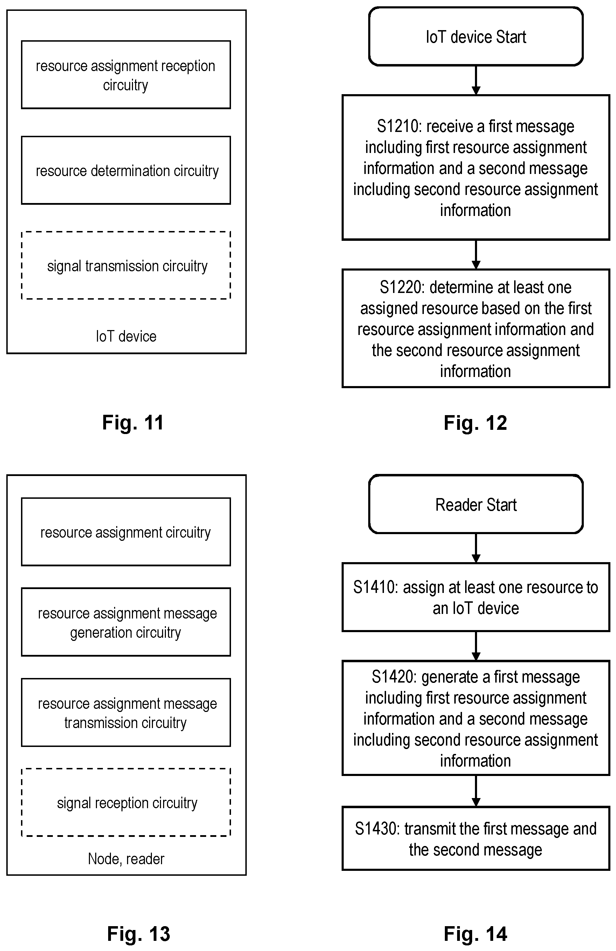

**Fig. 11** illustrates a simplified and exemplary IoT device structure according to a basic implementation of the improved IoT resource assignment procedure presented in more detail below. In one example, the device structure can be implemented based on the general device structure explained in connection with Fig. 10. The various structural elements of the IoT device illustrated in said Fig. 11 can be interconnected between one another e.g., with corresponding input/output nodes (not shown) e.g., in order to exchange control and user data and other signals. Although not shown for illustration purposes, the IoT device may include further structural elements.

As apparent from Fig. 11, the IoT device may include a resource assignment reception circuitry and a resource determination circuitry. Optionally, the IoT device may comprise signal transmission circuitry. The processing circuitry of the general device structure of Fig. 10 can be implemented as the above resource determination circuitry of Fig. 11, and can also perform further functions as will be become apparent from below. The transceiver of Fig. 10 can be implemented as the above resource assignment reception circuitry and the above signal transmission circuitry, and can also perform further functions as will become apparent from below.

One exemplary procedure is implemented by an IoT device that includes the following. A transceiver of the IoT device receives, from a reader, a first message including first resource assignment information and a second message including second resource assignment information. A circuitry of the IoT device determines at least one resource assigned to the IoT device for scheduling a signal transmission from the IoT device, wherein the circuitry determines the at least one assigned resource based on the first resource assignment information and the second resource assignment information.

A corresponding exemplary method comprises the following steps performed by an IoT device:
receiving (S1210), from a reader, a first message including first resource assignment information and a second message including second resource assignment information, and
determining (S1220) at least one resource assigned to the IoT device for scheduling a signal transmission from the IoT device, wherein the at least one assigned resource is determined based on the first resource assignment information and the second resource assignment information.

A corresponding sequence diagram for an exemplary IoT device behaviour in line with the above-discussed IoT device and method is presented in **Fig. 12****.**

The above-described improved IoT resource assignment procedure at the loT device facilitates achieving the objective and overcoming at least some of the drawbacks explained above. For instance, the above improved IoT resource assignment procedure clarifies details on how a resource assignment for a signal transmission is to be performed by the IoT device, particularly involving the reception of multiple resource assignment messages. Further advantages will become apparent from the below description of the various solutions, implementations and variants of the improved IoT resource assignment procedure.

The improved IoT resource assignment procedure further provides an improved reader. **Fig. 13** illustrates a simplified and exemplary reader structure according to an exemplary implementation of the improved IoT resource assignment procedure, which can be implemented based on the general device structure explained in connection with Fig. 10. The various structural elements of the reader illustrated in said Fig. 13 can be interconnected between one another e.g., with corresponding input/output nodes (not shown) e.g., in order to exchange control and user data and other signals. Although not shown for illustration purposes, the reader may include further structural elements.

As apparent therefrom, the reader comprises a resource assignment circuitry, a resource assignment message generation circuitry, and a resource assignment message transmission circuitry. Optionally, the reader may comprise a signal reception circuitry.

The processing circuitry of the general network device structure of Fig. 10 can be implemented as the above resource assignment circuitry and resource assignment message generation circuitry of Fig. 13, and can also perform further functions as will be become apparent from below. The transceiver of Fig. 10 can function as the above resource assignment message transmission circuitry and signal reception circuitry of Fig. 13, and can also perform further functions as will become apparent from below.

One exemplary procedure is implemented by a reader that includes the following. A circuitry of the reader assigns at least one resource to an Internet of Things, IoT, device, for scheduling a signal transmission from the IoT device. The circuitry generates a first message including first resource assignment information and a second message including second resource assignment information, wherein at least one of the first resource assignment information and the second resource assignment information indicate at least one assigned resource to the IoT device. A transceiver of the reader transmits the first message and the second message to the loT device.

A corresponding exemplary method comprises the following steps performed by a reader:
assigning (S1410) at least one resource to an Internet of Things, IoT, device, for scheduling a signal transmission from the IoT device,
generating (S1420) a first message including first resource assignment information and a second message including second resource assignment information, wherein at least one of the first resource assignment information and the second resource assignment information indicate at least one assigned resource to the IoT device,
transmitting (S1430) the first message and the second message to the IoT device.

A corresponding sequence diagram for an exemplary reader behaviour in line with the above-discussed reader and reader method is presented in **Fig. 14****.**

The above-described improved IoT resource assignment procedure at the reader side facilitates achieving the objective and overcoming at least some of the drawbacks explained above, in the same manner as already explained above for the IoT device.

In the following, two general principles underlying the above described IoT resource assignment procedure will be described, which may be implemented by the IoT device and the reader in the later described different solutions either alone or in combination.

### <Separation of frequency resource indication and time resource indication>

According to a first general principle, the first resource assignment information indicates at least one frequency resource assigned to a group of IoT devices and the second resource assignment information includes signal trigger information, and the IoT device identifies the at least one assigned frequency resource by using the first resource assignment information and determines a transmission time of the signal transmission based on the signal trigger information. In other words, according to the first general principle, frequency (or FDMA) resource assignments (or allocations) and time (or TDMA) resource assignments (or allocations) for the IoT device are carried by separate R2D messages. In this respect, the first message has the function of a frequency resource assignment message, which carries information on assigned frequencies for signal transmission, which indicates at least a part of frequency resources assigned to a group of IoT devices. The second message, which for example may be a last resource assignment message received by the IoT device before the signal transmission, has (at least) the function of a time resource assignment message (or "R2D trigger message"), which indicates the transmission time of at least one D2R message from the IoT Device to the reader.

This separation of the time resource indication into a separate message has the advantage that the IoT device can determine the transmission timing solely based on the indication included in the second message, but does not need to consider the first message for this purpose. Instead, the IoT device can determine (or "obtain" or "derive") the frequency resource assignment information from the first message, store this information and then apply the frequency resource assignment to the signal transmission of at least one D2R message in response to receiving the second message as R2D trigger message. This facilitates reducing the complexity of the IoT device when implementing a multi-message resource assignment procedure for a group of IoT devices and/or avoiding the need for increasing the counting capabilities of the IoT device.

In the first general principle, in some implementations, the frequency resource assignment information for the signal transmission is carried in a single first message. In other implementations, frequency resource assignment information may be carried by a plurality of first messages respectively indicating parts of frequency resources assigned to a group of IoT device. In such implementations, the assigned frequency resource(s) may be identified by the IoT device among one or more of the parts of the frequency resource (compare to the second general principle described below).

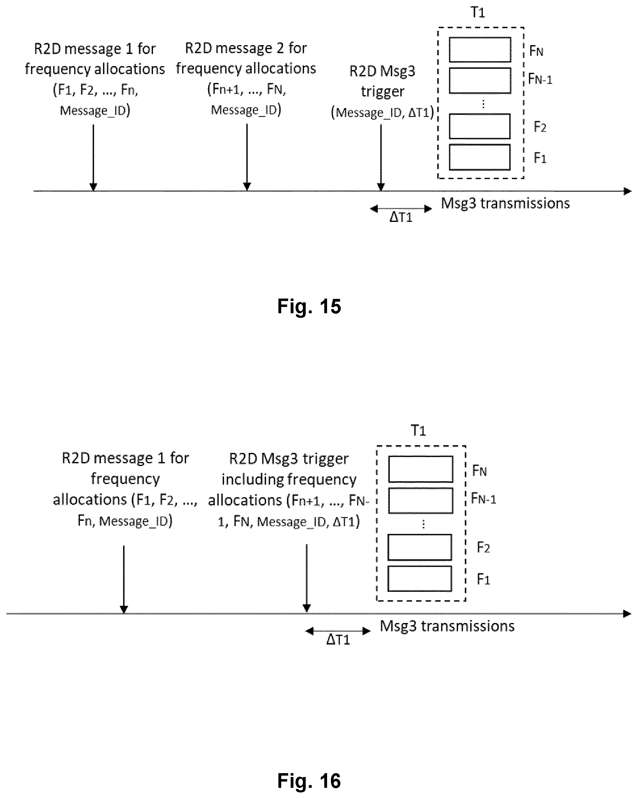

In some implementations, the second message may only include the signal trigger information, but may not include frequency resource assignment information (see e.g. R2D Msg3 trigger in **Fig. 15**). In other implementations, the second message may include the signal trigger information and additional frequency resource assignment information (see e.g. R2D Msg3 trigger in **Fig. 16**), which the IoT device may combine with the frequency resource assignment information obtained from the first message(s).

In some implementations, the IoT device may determine the starting time of the signal transmission by adding an offset time to the beginning or end of the reception time of the second message functioning as R2D trigger message. Hereby, in some implementations, the signal trigger information may indicate the offset time to the IoT device. In other implementations, the offset time may be pre-obtained (e.g. pre-defined or configured) by the IoT device before receiving the first and second message (as resource assignment message), may be obtained by the IoT device from a firmware of the IoT device and/or may be specified in a communication standard. In such implementations, the signal trigger information may indicate a signal trigger identifier (e.g. an ID or group ID of the addressed IoT device(s)), and the IoT device may determine that the second message functions as R2D trigger message based on the reception (or "identification") of the signal trigger information.

### <Combination of frequency resource indications>

According to a second general principle, the first resource assignment information indicates a first part of frequency resources assigned to a group of IoT devices for the signal transmissions and the second resource assignment information indicates a second part of frequency resources assigned to the group of IoT devices for the signal transmissions. The IoT device identifies the at least one assigned resource among the first part of frequency resources and/or among the second part of frequency resources. In other words, according to the second general principle, frequency (or FDMA) resource assignments (or allocations) for the IoT devices are carried by separate R2D messages (see e.g. R2D message 1 and R2D message 2 in **Fig. 15**). In other words, according to the second general principle, frequency (or FDMA) resource assignments (or allocations) for a group of IoT devices are separately transmitted by separate R2D messages. An IoT device among the group of IoT devices identifies the dedicated frequency resource(s) for its signal transmission among all the frequency resource assignments carried in both messages. Hereby, a frequency resource assignment for a specific IoT device may be carried by one or both of R2D messages. In this respect, in the second general principal, the first message and the second message have the function of frequency resource assignment messages, which include information on assigned frequency resources for the signal transmission.

The separation of the frequency resource indication into more than one separate frequency resource assignment message has the advantage that the frequency assignment can be extended to the available frequency range, even when the available bit size for a single resource assignment message is limited. Notably, the number of frequency resource assignment messages received by the IoT device(s) is not restricted to two messages, but the IoT device(s) may receive more frequency resource assignment messages.

In a first exemplary implementation of the second general principle, the frequency (or FDMA) resource assignments (or allocations) and time (or TDMA) resource assignments (or allocations) for the IoT device may be carried by separate R2D messages (see e.g. R2D message 1 and 2 and R2D Msg3 trigger in **Fig. 15**). Especially, according to the first exemplary implementation of the second general principle, the IoT device receives a third message including signal trigger information, and the IoT device determines the transmission time of the signal transmission based on the signal trigger information. Hereby, in an optional implementation, the third message is received after the first message and the second message.

This separation of the time resource indication into a separate message has the advantage that the IoT device can determine the transmission timing solely based on the indication included in the R2D trigger message (third message), but does not need to consider the frequency resource allocation messages (first and second messages) for this purpose. Instead, the IoT device can determine (or "obtain" or "derive") the frequency resource assignment information from the first or second messages, store this information and then apply the frequency resource assignment to the signal transmission of at least one D2R message, in response to receiving the third message as R2D trigger message. This facilitates reducing the complexity of the IoT device when implementing a FDMA resource assignment procedure and/or avoiding the need for increasing the counting capabilities of the IoT device.

In a second exemplary implementation of the second general principle, the second message may additionally include an indication of a starting of time resource assignments (or allocations) for the IoT device (see e.g. R2D Msg3 trigger in **Fig. 16**). Especially, according to the second exemplary implementation of the second general principle, the second resource assignment information includes signal trigger information; and the IoT device determines the transmission time of the signal transmission based on the signal trigger information. The signal trigger information may be indicated to the IoT device in the same manner as described for the first general principle. Especially, in the second exemplary implementation of the second general principle, the IoT device may receive a plurality of first messages (functioning as frequency resource allocation messages) and one second message (functioning as frequency resource allocation message and as R2D trigger message).

In the following, five different solutions of the above described IoT resource assignment procedure will be described, which may be implemented by the IoT device and the reader either alone or in any combination thereof. As will become apparent below, each of these solutions may be based at least on parts of one or both of the two general principles described above.

In brief, according to the First Solution, the IoT device may identify linked resource assignment messages by a common identifier included in the resource assignment messages to determine the assigned resource(s) for the signal transmission.

According to the Second Solution, the IoT device may identify the function of the resource assignment messages according to indications included in the resource allocation messages to determine the assigned resource(s) for the signal transmission.

According to the Third Solution, the IoT device may determine to combine the information obtained from the resource assignment messages according to a reception time of the resource assignment messages to determine the assigned resource(s) for the signal transmission.

According to the Fourth Solution, the IoT device may determine to identify the function of the resource assignment messages according to a resource assignment rule to determine the assigned resource(s) for the signal transmission.

According to the Fifth Solution, the IoT device may determine a common frequency resource allocation for a plurality of D2R transmission messages and may determine to combine the common frequency resource allocation with a plurality of R2D trigger messages to determine the assigned resources for the signal transmission of a plurality of D2R transmission messages.

### First Solution

According to the First Solution, the first message and the second message include a common message identifier. Optionally, a third message (compare to the second general principle described above), which the IoT devices receive in addition to the first message and to the second message, includes the common message identifier. The common message identifier is used by the IoT devices to determine a set of scheduling messages and a trigger message indicating the at least one resource for the signal transmission. In other words, in the First Solution, the IoT devices may combine the information obtained from the resource assignment messages including a same common identifier to determine the assigned resources for the signal transmission.

In some implementations, the common identifier may be a transaction/message identifier (ID), which is assigned by the reader to a specific transaction or transmission message. In other implementations, the common identifier may be a message/transaction group identifier, which is assigned by the reader to a group of transactions or transmission messages. In other implementations, the common identifier may be a device ID, which is assigned by the reader to address the target IoT device, or may be a device group ID, which is assigned by the reader to address a group of target IoT devices.

In this manner, the common identifier included in the linked resource assignment messages facilitates the IoT devices to identify, which of the received resource allocations' information have to be combined for determining the assigned resource(s) for the signal transmissions. Accordingly, the common identifier facilitates to include the frequency resource allocation information and the time resource allocation information in separate messages and also to include the frequency resource allocation information in separate messages.

**Fig. 15** illustrates a first exemplary implementation of the First Solution of the improved resource allocation procedure. In the illustrated example, it is assumed that the signal transmissions are Msg3 transmissions from IoT devices to the reader. To indicate the assigned frequency (FDMA) resources for the Msg3 transmissions, the reader generates frequency resource assignment messages (as example of the "first message"). In this example, the reader generates R2D message 1, which includes resource assignment information indicating the individual assignment of frequency resources F1 to Fn to a first group of IoT devices. Further, the reader generates R2D message 2, which includes resource assignment information indicating the individual assignment of frequency resources Fn+1 to FN to a second group of IoT devices (where the first group and the second group of IoT devices may overlap or may include different IoT devices). In addition, to indicate the starting time of the Msg3 transmissions, the reader generates an R2D Msg3 trigger message (as example of the "second message" or of the "third message"), which includes resource assignment information indicating the offset time ΔT1 between the reception of the R2D trigger message and the starting time of the Msg3 transmission. The reader adds the common message identifier Message_ID (as an example of the "common identifier") to the frequency resource assignment messages and to the R2D trigger message to mark these messages as a set of linked resource scheduling messages triggering aligned signal transmissions (here the Msg3 transmissions) in time domain.

The IoT devices receive the frequency resource assignment messages transmitted by the reader and determine the frequency resources assigned to the Msg3 transmissions as F1 to FN by utilizing the resource assignment information included in R2D message 1 (containing allocations of frequency resources F1 to Fn) and the resource assignment information included in R2D message 2 (containing allocations of frequency resources Fn+1 to FN). By identifying the same message identifier in the R2D Msg3 trigger message received by the IoT devices from the reader after the frequency resource assignment messages, the IoT devices identify (or determine) that the assigned frequency resources are allocated for the Msg3 transmissions triggered by the R2D Msg3 trigger message. Accordingly, the individual IoT devices determine to transmit the Msg3 transmissions by using the dedicated frequency resources obtained from one of the frequency resource assignment messages or from a combination of the frequency resource assignment messages. In addition, the IoT devices determine to transmit the Msg3 transmissions at the transmission time obtained from the R2D Msg3 trigger message, here ΔT1 after the reception time of the R2D Msg3 trigger message.

**Fig. 16** illustrates a second exemplary implementation of the First Solution of the improved resource allocation procedure. As a difference to the first exemplary implementation of the First Solution, in the second exemplary implementation, the R2D Msg3 trigger message (as an example of the "second message") includes the resource assignment information indicating the offset time ΔT1 and additionally includes frequency resource assignment information indicating the individual assignment of frequency resources Fn+1 to FN to a second group of IoT devices (where the first group and the second group of IoT devices may overlap or may include different IoT devices). Accordingly, in the second exemplary implementation of the First Solution, the R2D Msg3 trigger message (or the R2D trigger message in general) functions also as a frequency resource assignment message, which indicates a part of the assigned frequency resources to a group of IoT devices. Again the reader adds the common message identifier Message_ID (as an example of the "common identifier") to the frequency resource assignment message (R2D message 1) and to the R2D trigger message (R2D Msg3 trigger message) to mark these messages as a set of resource scheduling messages linked to a same signal transmission (here the Msg3 transmission).

The IoT devices receive the frequency resource assignment message, here R2D message 1 indicating the individual assignment of a first part of frequency resources, namely F1 to Fn, and the R2D Msg3 trigger message indicating the individual assignment of a second part of the frequency resources, namely Fn+1 to FN, and the offset time ΔT1, both transmitted by the reader. The IoT devices determine the assigned frequency resources for the Msg3 transmissions by utilizing the resource assignment information included in R2D message 1 (containing allocations of frequency resources F1 to Fn) and the R2D Msg3 trigger message (containing allocations for frequency resource Fn+1 to FN). By identifying the same message identifier in the frequency resource assignment message R2D message 1 and the R2D Msg3 trigger message, all the scheduled IoT devices are triggered by the R2D Msg3 trigger message. Accordingly, the individual IoT devices determine to transmit the Msg3 transmissions over the dedicated frequency resources obtained from the frequency resource assignment information included in at least one of messages. In addition, the IoT devices determine to transmit the Msg3 transmissions at the transmission time obtained from the R2D Msg3 trigger message, here ΔT1 after the reception time of the R2D Msg3 trigger message. Notably, also in the second exemplary implementation of the First Solution, the IoT devices may receive (and the reader may generate and transmit) more than one (a plurality) frequency resource assignment message before receiving the R2D trigger message.

In the above described exemplary implementations of the First Solution, the offset time is indicated explicitly by the R2D trigger message to the IoT devices. In other implementations, the offset time (or information indicating the offset time) may not be included in the R2D trigger message. For example, in some implementations, the offset time may be pre-obtained by the IoT device before receiving the R2D trigger message (e.g. indicated in a frequency resource assignment message), may be obtained by the IoT device from a firmware of the IoT device and/or may be specified in a communication standard. In other implementations, the offset time may be indicated implicitly by at least one of the frequency resource assignment message(s) or the R2D trigger message. In such implementations, the R2D trigger message may indicate a signal trigger identifier (e.g. an ID or group ID of the addressed IoT device(s)) or a specific trigger message format, and the IoT device may determine that the R2D trigger message functions as R2D trigger message based on the reception (or "identification") of the signal trigger identifier or the trigger message format.

### Second Solution

In the Second Solution, the different resource assignment messages may include additional indications supporting the IoT devices to determine the assigned resources for the signal transmission. In the Second Solution, it is assumed that at least one first message (e.g. at least one R2D frequency resource assignment message) is transmitted by the reader and received by the IoT device before the second message (e.g. a R2D trigger message).

According to a first exemplary implementation of the Second Solution the first message includes trigger message identification information indicating a trigger message identifier, and the signal trigger information includes the trigger message identifier. The IoT device identifies the trigger message identifier based on the trigger message identification information.

In this manner, the trigger message identification information included in the second message (e.g. a R2D trigger message) facilitates for the IoT device to identify, which of the received R2D resource assignment messages functions as a trigger message for the signal transmission, and thus facilitates determining the resource allocation information to be combined for determining the assigned resource(s) for the signal transmission. Accordingly, the trigger message identification information facilitates to include the frequency resource allocation information and the time resource allocation information in separate messages and also to include allocations for a plurality of frequency resources in separate messages. This has the advantage that there is no need to include additional timing information into the earlier transmitted and received resource assignment (or scheduling) messages. Furthermore, including the trigger message identification information in the first message, for example an initial resource assignment message, has the advantage that only one of the frequency resource assignment messages (as example of the "first message(s)) needs to include the trigger message identifier.

The trigger message identifier may for example be a transaction/message identifier (ID), a message/transaction group identifier, a device ID, or a device group ID, as it was described for the First Solution.

In some examples, if more than one R2D frequency resource assignment messages are transmitted by the reader and received by the IoT device before the R2D trigger message, those R2D frequency resource assignment messages may include the common message identifier described in the First Solution, while the R2D trigger message may include the trigger message identifier.

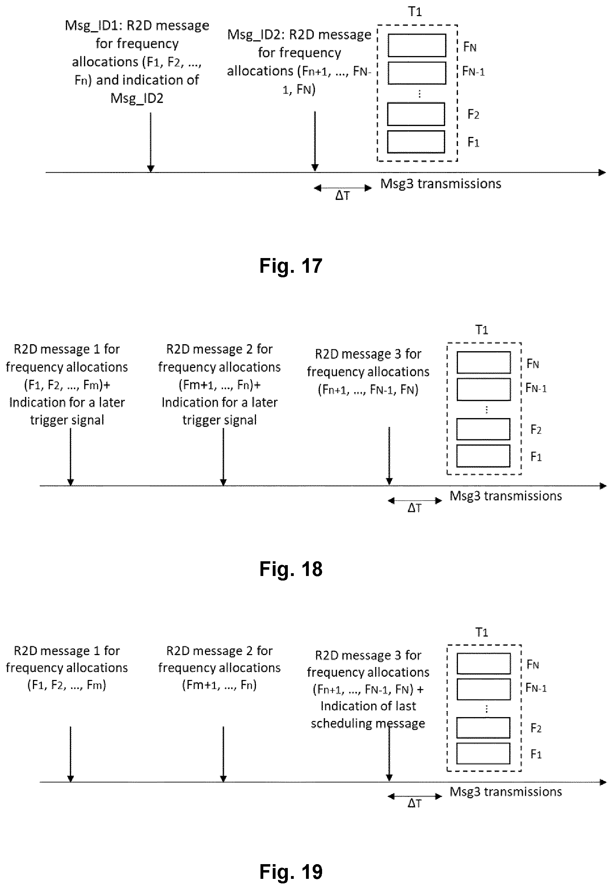

**Fig. 17** illustrates an exemplary resource allocation procedure according to the first exemplary implementation of the Second Solution. In the illustrated example, it is again assumed that the signal transmissions are Msg3 transmissions from the IoT devices to the reader. To indicate the assigned frequency (FDMA) resources for the Msg3 transmission, the reader generates frequency resource assignment messages. In this example, the reader generates a first R2D message including the common message identifier Msg_ID1 and a second R2D message including the trigger message identifier Msg_ID2. The first R2D message includes resource assignment information indicating the individual assignment of F1 to Fn to a first group of IoT devices, and the second R2D message includes resource assignment information indicating the individual assignment of frequency resources Fn+1 to FN to a second group of IoT devices (where the first group and the second group of IoT devices may overlap or may include different IoT devices). To indicate the starting time of the Msg3 transmissions, the reader includes information indicating the trigger message identifier Msg_ID2 into the first R2D message and includes the trigger message identifier Msg_ID2 as signal trigger information into the second R2D message to mark these messages as a set of linked resource scheduling messages linked to same signal transmissions (here the Msg3 transmissions).

The IoT devices receive the R2D messages transmitted by the reader and determine the frequency resources assigned to the Msg3 transmissions as F1 to FN by utilizing the resource assignment information included in the first R2D message (containing allocations of frequency resources F1 to Fn) and the resource assignment information included in the second R2D message (containing allocations of frequency resources Fn+1 to FN). By identifying the trigger message identifier Msg_ID2 in the second R2D message, the IoT device determines that the second R2D message functions as the R2D trigger message (here the R2D Msg3 trigger message). Accordingly, the individual IoT devices determine to transmit the Msg3 transmissions by using the dedicated frequency resources obtained from one of the R2D messages or from a combination of the R2D messages. In addition, the IoT devices determine to transmit the Msg3 transmissions at the transmission time obtained from the second R2D message, here the offset time ΔT after the reception time of the R2D Msg3 trigger message.

According to a second exemplary implementation of the Second Solution, the first message includes a signal trigger indication indicating whether or not the first message includes the signal trigger information. The IoT device, if the signal trigger indication indicates that the first message does not include signal trigger information, determines the transmission time of the signal transmission based on the second message.

In the second exemplary implementation of the Second Solution, the IoT devices as default consider each received R2D resource assignment message to function as R2D trigger message for a signal transmission. But, any received R2D resource assignment message (as example of the "first message") can include the signal trigger indication (e.g., in form of a 1-bit field included in the R2D resource assignment message) indicating that the R2D resource allocation message is not a R2D trigger message (e.g., by indicating that the R2D trigger will be received with a later message). The IoT devices will then determine that the R2D resource assignment message functions only as R2D frequency resource assignment message indicating frequency resource allocations for the next signal transmission, but not as R2D trigger message. Accordingly, the IoT device will wait at least for the next R2D resource allocation message before starting the signal transmission.

In this manner, the signal trigger indication included in an R2D resource assignment message facilitates for the IoT devices to identify, which of the received R2D resource assignment messages functions as a trigger message for the signal transmission. This has the advantage that there is no need to include additional timing information into the earlier transmitted and received resource assignment (or scheduling) messages.

**Fig. 18** illustrates an exemplary resource allocation procedure according to the second exemplary implementation of the Second Solution. In the illustrated example, it is again assumed that the signal transmissions are an Msg3 transmissions from the loT device to the reader. To indicate the assigned frequency (FDMA) resources for the Msg3 transmissions, in the illustrated example the reader generates R2D resource assignment messages R2D message 1, R2D message 2 and R2D message 3. R2D message 1 includes resource assignment information indicating the individual assignment of frequency resources F1 to Fm to a first group of IoT devices, R2D message 2 includes resource assignment information indicating the individual assignment of frequency resources Fm+1 to Fn to a second group of IoT devices, and R2D message 3 includes resource assignment information indicating the individual assignment of frequency resources Fn+1 to FN to a third group of IoT devices for the signal transmission (where the first group of IoT devices, the second group of IoT devices and the third group of IoT devices may respectively overlap or may respectively include different IoT devices). To indicate the starting time of the Msg3 transmissions, the reader includes the signal trigger indication (e.g. in form of a 1-bit field included in the R2D resource allocation message) indicating that the R2D resource allocation message is not a R2D trigger message (e.g. by indicating that a later R2D trigger message will be received by the IoT device) in R2D message 1 and R2D message 2, but does not include such signal trigger indication in R2D message 3.

The IoT devices receive the R2D resource assignment messages R2D message 1, R2D message 2 and R2D message 3 and determine the frequency resource(s) assigned to the Msg3 transmission as F1 to FN by utilizing the resource assignment information included in R2D message 1 (containing allocations of frequency resources F1 to Fm), the resource assignment information included in R2D message 2 (containing allocations of frequency resources Fm+1 to Fn), and the resource assignment information included in R2D message 2 (containing allocations of frequency resources Fn+1 to FN). By identifying that R2D message 1 and R2D message 2 include the signal trigger indication indicating that the respective message is not the signal trigger message, the loT devices determines that R2D message 3 functions as the R2D trigger message (here the R2D Msg3 trigger message). Accordingly, the individual IoT devices determine to transmit the Msg3 transmissions by using the dedicated frequency resources obtained from one of the R2D resource assignment messages or from a combination of the R2D resource assignment messages. In addition, the IoT devices determine to transmit the Msg3 transmission at the transmission time obtained from R2D message 3, here the offset time ΔT after the reception time of the R2D Msg3 trigger message.

According to a third exemplary implementation of the Second Solution, the second message includes a signal trigger indication indicating whether or not the second message includes the signal trigger information. The IoT device, if the signal trigger indication indicates that the second message includes signal trigger information, determines the transmission time of the signal transmission based on the second message.

In the third exemplary implementation of the Second Solution, the IoT devices as default consider each received R2D resource allocation message to function as R2D frequency resource allocation message, but not as R2D trigger message. But, any received R2D resource allocation message (as example of the "second message") can include the signal trigger indication (e.g. in form of a 1-bit field included in the R2D resource assignment message) indicating that the R2D resource allocation message functions as R2D trigger message. The IoT devices will then determine that the R2D resource allocation message functions as R2D trigger message. Accordingly, the IoT devices will consider the R2D resource allocation message, which is indicated to function as R2D trigger message as the last R2D resource allocation message and will proceed with the signal transmission based on the assigned resource(s).

In this manner, the signal trigger indication included in an R2D resource allocation message facilitates for the IoT device to identify, which of the received R2D resource assignment messages functions as a trigger message for the signal transmission. This has the advantage that there is no need to include additional timing information into the earlier transmitted and received resource assignment (or scheduling) messages.

**Fig. 19** illustrates an exemplary resource allocation procedure according to the third exemplary implementation of the Second Solution. In the illustrated example, it is again assumed that the signal transmissions are Msg3 transmissions from the IoT devices to the reader. To indicate the assigned frequency (FDMA) resources for the Msg3 transmission, in the illustrated example the reader generates resource assignment messages R2D message 1, R2D message 2 and R2D message 3. R2D message 1 includes resource assignment information indicating the individual assignment of frequency resources F1 to Fm to a first group of IoT devices, R2D message 2 includes resource assignment information indicating the individual assignment of frequency resources Fm+1 to Fn to a second group of IoT devices, and R2D message 3 includes resource assignment information indicating the individual assignment of frequency resources Fn+1 to FN to a third group of IoT devices for the signal transmission (where the first group of IoT devices, the second group of IoT devices and the third group of IoT devices may respectively overlap or may respectively include different IoT devices). To indicate the starting time of the Msg3 transmissions, the reader includes the signal trigger indication (e.g. in form of a 1-bit field included in the R2D resource allocation message) indicating that the R2D resource allocation message is a R2D trigger message (e.g. by indicating that the respective R2D resource allocation message is the last scheduling message) in R2D message 3, but does not include such indication in R2D message 1 and R2D message 2.

The IoT devices receive the R2D resource assignment messages R2D message 1, R2D message 2 and R2D message 3 and determine the frequency resource(s) assigned to the Msg3 transmission as F1 to FN by utilizing the resource assignment information included in R2D message 1 (containing allocations of frequency resources F1 to Fm), the resource assignment information included in R2D message 2 (containing allocations of frequency resources Fm+1 to Fn), and the resource assignment information included in R2D message 2 (containing allocations of frequency resources Fn+1 to FN). By using the signal trigger indication included in R2D message 3, the IoT devices determine that R2D message 3 functions as the R2D trigger message (here the R2D Msg3 trigger message). Accordingly, the individual IoT devices determine to transmit the Msg3 transmissions by using the dedicated frequency resources obtained from one of the R2D resource assignment messages or from a combination of the R2D resource assignment messages. In addition, the IoT devices determine to transmit the Msg3 transmissions at the transmission time obtained from R2D message 3, here the offset time ΔT after the reception time of the R2D Msg3 trigger message.

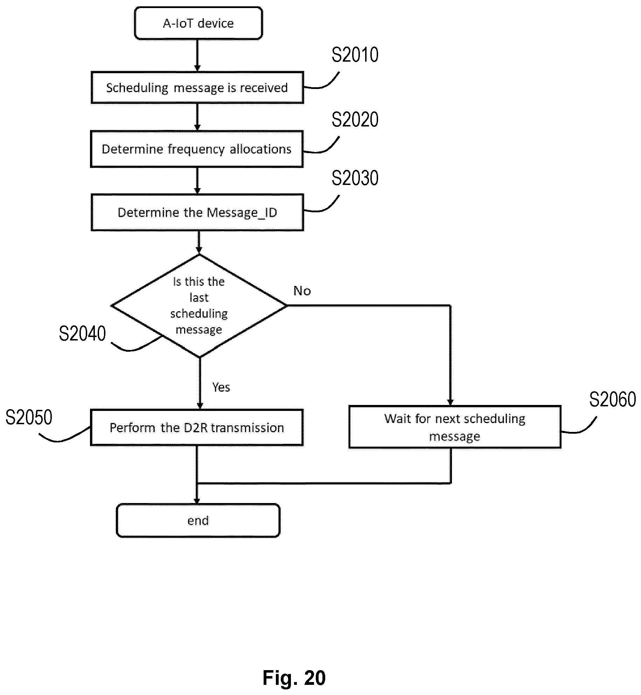

**Fig. 20** is a sequence diagram for an exemplary behavior of an individual IoT device in the third exemplary implementation of the Second Solution of the improved resource allocation procedure.

The IoT device receives in step S2010 a scheduling message as R2D resource assignment message. In step S2020, the loT device determines, if it is among the group of IoT devices addressed with the scheduling message. If the IoT device determines one of the frequency resources allocated by the scheduling message is dedicated for the IoT device, the IoT device determines to use the dedicated frequency resource for the next signal transmission. In an optional step S2030, the IoT device the determines whether the Message_ID (as "common identifier") is included in the scheduling message to mark the scheduling message as part of a set of resource scheduling messages linked to a same signal transmission.

In step S2040, the IoT device determines whether or not the signal trigger indication is included in the scheduling message to determine whether or not the scheduling message is the last scheduling message before the D2R signal transmission. If the signal trigger indication indicates that the scheduling message is the last scheduling message (Yes in step S2040), the IoT device proceeds to step S2050 and performs the D2R signal transmission (i.e. the IoT device considers the scheduling message as the R2D trigger message for the D2R transmission). If the signal trigger indication is not included in the scheduling message or indicates that that the scheduling message is not the last scheduling message (No in step S2040), the IoT device proceeds to step S2060 and waits for the next scheduling message. With the reception of the next scheduling message the operation of the IoT device starts again from step S2010.

In the above described exemplary implementations of the Second solution, the offset time ΔT may be pre-obtained (e.g. pre-defined or configured) by the IoT device before receiving the R2D resource assignment message functioning as the R2D trigger message. For example, the offset time ΔT may be indicated or configured explicitly by an R2D message to the IoT device before the reception of the R2D resource assignment message, or may be obtained by the IoT device from a firmware of the IoT device and/or may be specified in a communication standard. This dispenses with the need to indicate the offset time by R2D resource assignment messages, so that it may be possible to reduce the R2D overhead. In some other implementations, the offset time ΔT (or information indicating the offset time) may be indicated explicitly or implicitly by at least one of the R2D resource assignment message(s) including the R2D resource assignment message functioning as the R2D trigger message in a similar manner as it has been described for the First Solution.

### Third Solution

According to the Third Solution, if the second message is received within an offset time starting from the reception time of the first message, determines that the transmission time of the signal transmission is based on the second message. In the Third Solution, it is again assumed that the first message is a message received before the second message.

In the Third Solution, the IoT devices by default consider each received R2D resource assignment message to function as R2D trigger message (and as R2D frequency resource assignment message) for the signal transmission. A later received R2D resource assignment message (as an example of the "second message") is considered to override (or "delay" or "update") the transmission time determined based on an earlier received R2D resource assignment message (as an example of the "first message"), if the later received R2D resource assignment message is received within the offset time starting from the reception time of the earlier received R2D resource assignment message. The later received R2D resource assignment message only overrides the time resource information provided by the earlier received R2D resource assignment message, but not the frequency resource assignment information. In other words, before the offset time has passed after the reception time of an R2D resource assignment message, the IoT device checks whether or not further resource assignment messages are received, and if no other resource assignment messages are received, the IoT devices switches to the transmission mode and transmits the signal transmission based on the allocation of frequency resources indicated by at least one of the previously received resource assignment messages.

In this manner, the Third Solution facilitates for the IoT devices to identify, which of the received R2D resource assignment messages are to be combined, without the need of adding additional identification information in the R2D resource assignment messages. Furthermore, there may be no need for the reader to include specific timing information in each of the received resource assignment (or scheduling) messages. This facilitates reducing the counting capability requirements of the IoT devices

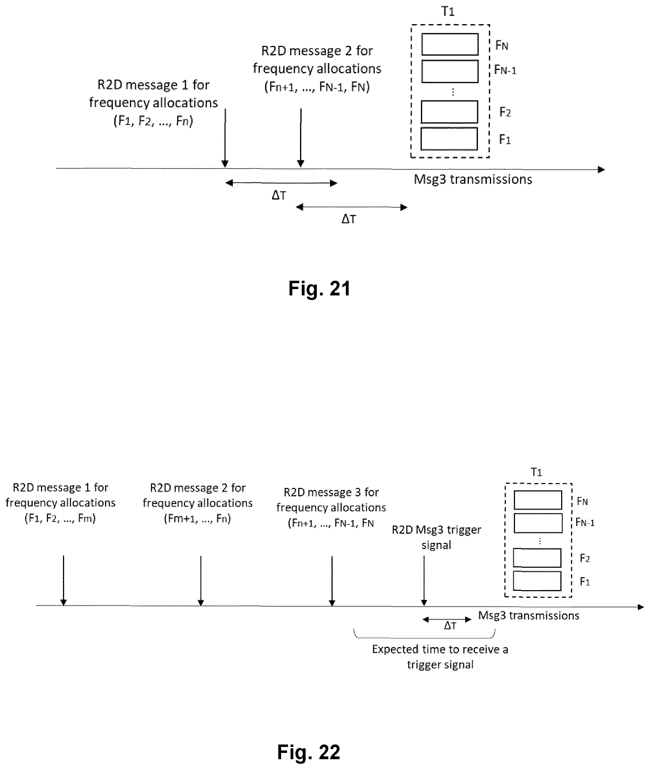

**Fig. 21** illustrates an exemplary resource allocation procedure according to the Third Solution. In the illustrated example, it is again assumed that the signal transmissions are Msg3 transmissions from the IoT devices to the reader. To indicate the assigned frequency (FDMA) resources for the Msg3 transmissions, the reader generates a first resource assignment message (as example of the "first message"), in this example R2D message 1, and a second R2D message 2 (as example of the "second message"). R2D message 1 includes resource assignment information indicating the individual assignment of frequency resources F1 to Fn to a first group of IoT devices, and R2D message 2 includes resource assignment information indicating the individual assignment of that frequency resources Fn+1 to FN are allocated to a another second group of IoT devices (where the first group of IoT devices and the second group of IoT devices may overlap or may include different IoT devices). To indicate the starting time of the Msg3 transmissions, the reader transmits R2D message 2 within the offset time ΔT starting from the transmission time (which coincides reception time from the IoT device perspective) of R2D message 1.

The IoT devices receive the resource assignment message R2D message 1 and initially determine the frequency resources assigned to the Msg3 transmissions as F1 to Fn by utilizing the resource assignment information included in R2D message 1 (containing allocations of frequency resources F1 to Fn). In addition, the IoT devices initially determine to start the Msg3 transmission at the transmission time obtained from R2D message 1, here the offset time ΔT after the reception time of the R2D message 1. However, the IoT devices additionally receives the resource assignment message R2D message 2 within the offset time ΔT after the reception time of the R2D message 1 (i.e. before the initially determined start of the Msg3 transmission), and accordingly determine to override the transmission time information received from the R2D message 1 and to also consider the frequency resource information included in R2D message 2. Accordingly, for the illustrated Msg3 transmission, the IoT devices determine the frequency resources assigned to the Msg3 transmissions as F1 to FN by utilizing the resource assignment information included in R2D message 1 and the resource assignment information included in R2D message 2 (containing allocations of frequency resources Fn+1 to FN). Accordingly, the individual IoT devices determine to transmit the Msg3 transmissions over the dedicated frequency resources obtained from the frequency resource assignment information included in at least one of the resource assignment messages. In addition, the IoT devices determine to start the Msg3 transmissions at the transmission time obtained from R2D message 2, here the offset time ΔT after the reception time of the R2D message 1.

In the Third Solution, the offset time ΔT may be pre-obtained (e.g. pre-defined or configured) by the IoT device(s) before receiving the R2D resource assignment message functioning as the R2D trigger message. For example, the offset time ΔT may be indicated or configured explicitly by an R2D message to the IoT device(s) before the reception of the R2D resource assignment message, or may be obtained by the IoT device(s) from a firmware of the IoT device(s) and/or may be specified in a communication standard. This dispenses with the need to indicate the offset time by R2D resource assignment messages, so that it may be possible to reduce the R2D overhead. In some other implementations, the offset time ΔT (or information indicating the offset time) may be indicated explicitly or implicitly by at least one of the R2D resource assignment message(s) in a similar manner as it has been described for the First Solution, e.g. by the initial R2D resource assignment message of a set of R2D resource assignment messages.

Notably, the principles of the Third solution may also be applied to the reception of R2D trigger messages in the First Solution and in the Second Solution. For example, in those solutions, a later received R2D trigger message (or a message functioning as R2D trigger message) may be considered to override (or "delay" or "update") the transmission time determined based on an earlier received R2D trigger message (or a message functioning as R2D trigger message), if the later received R2D trigger message is received within the offset time starting from the reception time of the earlier received R2D trigger message.

### Fourth Solution

According to the Fourth Solution, the IoT device obtains a resource assignment rule, which includes at least one trigger condition for triggering the signal transmission and the determining of the at least one assigned resource includes determining whether or not the at least one trigger condition is fulfilled. In other words, in the Forth Solution, the IoT devices determine the resource assignment for a signal transmission according to a resource assignment rule. For example, the IoT devices may expect to receive a R2D trigger message (as an example of the "second message"), only after at least one trigger condition defined by the resource assignment rule is fulfilled (or "satisfied" or "met").

In some implementations, the resource assignment rule may include at least one of the following trigger conditions.

A first trigger condition may define that the R2D trigger message for the signal transmission is only received by the IoT devices at least a minimum delay time starting from the reception of an initial R2D resource allocation message (as an example of the "first message") in a set of R2D resource allocation messages indicating the resources assigned for the signal transmission. The IoT devices may determine that the first trigger condition is fulfilled, if the minimum delay time has passed since the reception of the initial R2D resource allocation message.

A second trigger condition may define a reception of a minimum number of R2D resource allocation messages (as an example of the "first message") including frequency resource assignment information. The IoT devices may determine that the second trigger condition is fulfilled, if the minimum number of R2D resource allocation messages has been received in a set of R2D resource allocation message indicating the resources assigned for the signal transmission.

A third trigger condition may define a signal transmission triggering coding rate. The IoT devices may determine that the third trigger condition is fulfilled, if the coding rate of the received R2D resource allocation message is equal to the signal transmission triggering coding rate.

For example, the minimum delay time, the minimum number of R2D resource allocation messages, and/or the signal transmission triggering coding rate may be selected by the reader depending on the number of frequency resources (or frequency channels) available for (or assigned to) the scheduled group of IoT devices.

In the Fourth Solution, trigger condition parameter(s), like the minimum delay time, the minimum number of R2D resource allocation messages, and/or the signal transmission triggering coding rate, may be pre-obtained (e.g. pre-defined or configured) by the IoT device(s) before receiving the initial R2D resource assignment message. For example, the trigger condition parameter(s) may be indicated or configured explicitly by an R2D message to the IoT device(s) before the reception of the R2D resource assignment message. In other examples, the trigger condition parameter(s) be obtained by the IoT device(s) from a firmware of the IoT device(s) and/or may be specified in a communication standard. This dispenses with the need to indicate the trigger condition parameter(s) by R2D resource assignment messages, so that it may be possible to reduce the R2D overhead. In some other implementations, the trigger condition parameter(s) (or information indicating the trigger condition parameter(s)) may be indicated explicitly or implicitly by at least one of the R2D resource assignment message(s) in a similar manner as it has been described for the First Solution, e.g. by the initial R2D resource assignment message of a set of R2D resource assignment messages.

**Fig. 22** illustrates an exemplary resource allocation procedure according to the Fourth Solution. In the illustrated example, it is again assumed that the signal transmissions are Msg3 transmissions from the IoT device to the reader. In the illustrated example, the trigger condition defines a reception of three (as minimum number) R2D resource assignment messages, before a reception of an R2D trigger message can be expected by the IoT devices within the expected time to receive a trigger signal. To indicate the assigned frequency (FDMA) resources for the Msg3 transmissions, in the illustrated example the reader generates R2D resource assignment messages R2D message 1, R2D message 2 and R2D message 3. R2D message 1 includes resource assignment information indicating the individual assignment of frequency resources F1 to Fm to a first group of IoT devices, R2D message 2 includes resource assignment information indicating the individual assignment of frequency resources Fm+1 to Fn to a second group of loT devices, and R2D message 3 includes resource assignment information indicating the individual assignment of frequency resources Fn+1 to FN to a third group of IoT devices for the signal transmissions (where the first group of IoT devices, the second group of IoT devices and the third group of IoT devices may respectively overlap or may respectively include different IoT devices). In addition, to indicate the starting time of the Msg3 transmissions, the reader generates an R2D Msg3 trigger message, and transmits the R2D Msg3 trigger message after the (minimum number of three R2D resource assignment messages R2D message 1, R2D message 2 and R2D message 3.

The loT devices receive the R2D resource assignment messages R2D message 1, R2D message 2 and R2D message 3 and determine the frequency resource(s) assigned to the Msg3 transmissions as F1 to FN by utilizing the resource assignment information included in R2D message 1 (containing allocations of frequency resources F1 to Fm), the resource assignment information included in R2D message 2 (containing allocations of frequency resources Fm+1 to Fn), and the resource assignment information included in R2D message 2 (containing allocations of frequency resources Fn+1 to FN). Accordingly, the individual IoT devices determine to transmit the Msg3 transmissions by using the dedicated frequency resources obtained from one of the R2D resource assignment messages or from a combination of the R2D resource assignment messages. In addition, the IoT devices determine to start the Msg3 transmission at the transmission time obtained from the R2D Msg3 trigger message, here the offset time ΔT after the reception time of the R2D Msg3 trigger message.

In the Fourth Solution, the offset time ΔT may be pre-obtained (e.g. pre-defined or configured) by the IoT device(s) before receiving the R2D resource assignment message functioning as the R2D trigger message. For example, the offset time ΔT may be indicated or configured explicitly by an R2D message to the IoT device(s) before the reception of the R2D resource assignment message, or may be obtained by the IoT device(s) from a firmware of the IoT device(s) and/or may be specified in a communication standard. This dispenses with the need to indicate the offset time by R2D resource assignment messages, so that it may be possible to reduce the R2D overhead. In some other implementations, the offset time ΔT (or information indicating the offset time) may be indicated explicitly or implicitly by at least one of the R2D resource assignment message(s) in a similar manner as it has been described for the First Solution, e.g. by the initial R2D resource assignment message of a set of R2D resource assignment messages.

### Fifth Solution

According to the Fifth Solution, wherein the signal transmission includes a plurality of transmission messages, and wherein the circuitry, in operation, determines at least one common frequency resource for the plurality of transmission messages.

In the Fifth Solution, the assigned frequency resources may be determined by the IoT devices according to any of the First to Fourth Solution. Then, if the signal transmission includes a plurality of transmission messages, the determined assigned frequency resources can be re-used by the IoT devices for several transmissions of a transmission message.

This facilitates for the IoT devices to re-use the frequency resource assignment information for multiple transmission messages (or D2R messages), thus dispensing the need to send frequency resource assignment information from the reader to the IoT device for each of the transmission messages (or D2R messages).

In some implementations, whether or not to re-use the assigned frequency resources (or re-use the previous frequency resource allocation may be indicated to the IoT device. In some examples, an R2D trigger message (as an example of the "second message"), which serves as the R2D trigger signal for a D2R transmission may include a re-use indication, which indicates to the addressed IoT devices whether or not to re-use the assigned frequency resource(s) in the next D2R transmission after the triggered D2R transmission. In some examples, a R2D (frequency) resource assignment message (as an example of the "first message"), which carries frequency resource assignment information, may include a re-use indication which may indicate to the addressed IoT devices whether or not to re-use the assigned frequency resource(s) and optionally for how many transmissions to re-use the assigned frequency resource(s).

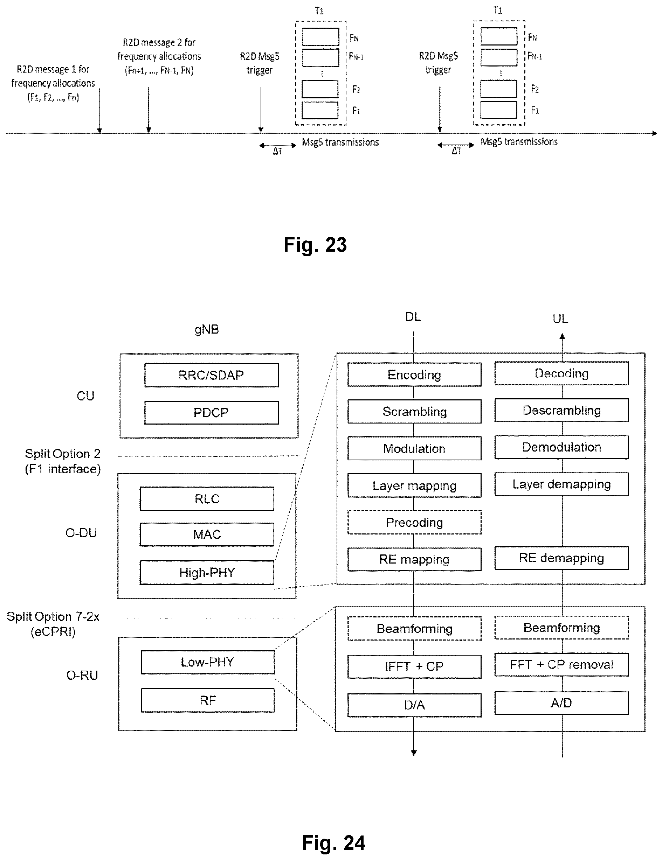

**Fig. 23** illustrates an exemplary resource allocation procedure according to the Fifth Solution. In the illustrated example, it is assumed that the signal transmissions include a plurality of Msg5 transmissions from the IoT devices to the reader. To indicate the assigned frequency (FDMA) resources for all the illustrated Msg5 transmissions, the reader generates frequency resource assignment messages. In this example, the reader generates R2D message 1, which includes resource assignment information indicating the individual assignment of frequency resources F1 to Fn to a first group of IoT devices. Further, the reader generates R2D message 2, which includes resource assignment information indicating the individual assignment of frequency resources Fn+1 to FN to a second group of IoT devices (where the first group and the second group of IoT devices may overlap or may include different IoT devices). In addition, to indicate the starting time of the first Msg5 transmissions, the reader generates a first R2D Msg5 trigger message, and to indicate the starting time of the first Msg5 transmissions, the reader generates a second R2D Msg5 trigger message.

The IoT devices receive the frequency resource assignment messages transmitted by the reader and determine the frequency resources assigned to the first Msg5 transmissions as F1 to FN by utilizing the resource assignment information included in R2D message 1 (containing allocations of frequency resources F1 to Fn) and the resource assignment information included in R2D message 2 (containing allocations of frequency resources Fn+1 to FN). For example, an individual loT device may determine to transmit the first Msg5 transmissions by using the dedicated frequency resources obtained from one of the frequency resource assignment messages or from a combination of the frequency resource assignment messages. Further, the IoT device determine to re-use the dedicated frequency resources for the second Msg5 transmissions. In addition, the IoT devices determine to transmit the first Msg5 transmission at the transmission time obtained from the first R2D Msg5 trigger message and determine to transmit the second Msg5 transmission at the transmission time obtained from the second R2D Msg5 trigger message, here ΔT after the reception time of the first R2D Msg5 trigger message and the second R2D Msg5 trigger message, respectively.

The offset time ΔT may be obtained by the IoT devices as described in one of the First to Fourth Solutions.

### FURTHER IMPLEMENTATIONS

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**Fig. 24** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient IoT Reader and an Ambient IoT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient IoT)

The terminal and the base station in one exemplary embodiment of the preset disclosure may be replaced with any of an Ambient IoT Device or an Ambient IoT Reader.

The Ambient IoT Device may be a wireless communication device having a backscattering function or having a transmission/reception bandwidth of several resource blocks or less. Further, the Ambient IoT Reader may be a wireless communication device having a communication function with an Ambient IoT Device. The Ambient IoT Device may also be referred to as an Ambient IoT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

### (Hardware and Software Implementation)

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, there is provided an Internet of Things, IoT, device comprising a transceiver, which in operation, receives, from a reader, a first message including first resource assignment information and a second message including second resource assignment information, and circuitry, which in operation, determines at least one resource assigned to the IoT device for scheduling a signal transmission from the IoT device, wherein the circuitry, in operation, determines the at least one assigned resource based on the first resource assignment information and the second resource assignment information.

According to a second aspect, the first resource assignment information indicates at least one frequency resource assigned to a group of IoT devices and the second resource assignment information includes signal trigger information, and the circuitry, in operation, identifies the at least one assigned frequency resource by using the first resource assignment information and determines a transmission time of the signal transmission based on the signal trigger information. In an optional implementation, the signal trigger information indicates an offset time between the reception time of the second message and the transmission time of the signal transmission. In another optional implementation, the signal trigger information indicates a signal trigger identifier.

According to a third aspect, the first resource assignment information indicates a first part of frequency resources assigned to a group of IoT devices and the second resource assignment information indicates a second part of frequency resources assigned to the group of IoT devices for the signal transmission, and the circuitry, in operation, identifies the at least one assigned resource among the first part of frequency resources and/or among the second part of frequency resources.

According to a fourth aspect, the transceiver, in operation, receives a third message including signal trigger information, and the circuitry, in operation, determines the transmission time of the signal transmission based on the signal trigger information. In an optional implementation, the third message is received after the first message and the second message.

According to a fifth aspect, the second resource assignment information includes signal trigger information, and the circuitry, in operation, determines the transmission time of the signal transmission based on the signal trigger information.

According to a sixth aspect, the first message and the second message include a common message identifier. In an optional implementation, the third message includes the common message identifier.

According to a seventh aspect, the first message is received before the second message and wherein the first message includes trigger message identification information indicating a trigger message identifier, the signal trigger information includes the trigger message identifier, and the circuitry, in operation, identifies the trigger message identifier based on the trigger message identification information.

According to an eighth aspect, the first message is received before the second message and the first message includes a signal trigger indication indicating whether or not the first message includes the signal trigger information, and the circuitry, in operation, if the signal trigger indication indicates that the first message does not include signal trigger information, determines the transmission time of the signal transmission based on the second message.

According to a ninth aspect, the first message is received before the second message, and the second message includes a signal trigger indication indicating whether or not the second message includes the signal trigger information, and the circuitry, in operation, if the signal trigger indication indicates that the second message includes signal trigger information, determines the transmission time of the signal transmission based on the second message.

According to a tenth aspect, the first message is received before the second message, and the circuitry, in operation, if the second message is received within an offset time starting from the reception time of the first message, determines that the transmission time of the signal transmission is based on the second message. In an optional implementation, the first message includes signal trigger information, which indicates the offset time. In another optional implementation, the offset time is pre-obtained by the circuitry.

According to an eleventh aspect, the circuitry, in operation, obtains a resource assignment rule, which includes at least one trigger condition for triggering the signal transmission, and the determining of the at least one assigned resource includes determining whether or not the at least one trigger condition is fulfilled. In an optional implementation, the at least one trigger condition defines a minimum delay time after the reception of the first message. In another optional implementation, the at least one trigger condition defines a minimum delay time after the reception of the second message. In another optional implementation, the at least one trigger condition defines a reception of a minimum number of resource assignment messages including resource assignment information. In another optional implementation, the at least one trigger condition defines a signal transmission triggering coding rate.

According to a twelfth aspect, the signal transmission includes a plurality of transmission messages, and the circuitry, in operation, determines at least one common frequency resource for the plurality of transmission messages.

According to a thirteenth aspect, there is provided a reader comprising circuitry, which in operation, assigns at least one resource to an Internet of Things, IoT, device, for scheduling signal transmission from the IoT device, and generates a first message including first resource assignment information and a second message including second resource assignment information, wherein at least one of the first resource assignment information or the second resource assignment information indicate the at least one assigned resource to the IoT device, and a transceiver, which in operation, transmits the first message and the second message to the IoT device.

According to a fourteenth aspect, there is provided a method performed by an IoT device, the method comprising the steps of: (i) receiving, from a reader, a first message including first resource assignment information and a second message including second resource assignment information, and (ii) determining at least one resource assigned to the IoT device for scheduling signal transmission from the IoT device, wherein the at least one assigned resource is determined based on the first resource assignment information and the second resource assignment information.

According to an optional implementation, the method further includes one or a combination of the steps performed by the IoT device of any of the first to twelfth aspects.

According to a fifteenth aspect, there is provided a method performed by a reader, the method comprising the steps of: (i) assigning at least one resource to an Internet of Things, IoT, device, for scheduling signal transmission from the IoT device, (ii) generating a first message including first resource assignment information and a second message including second resource assignment information, wherein at least one of the first resource assignment information and the second resource assignment information indicate the at least one assigned resource to the IoT device; and (iii) transmitting the first message and the second message to the IoT device.

According to a sixteenth aspect, there is provided an integrated circuit for controlling a process of an IoT device, the process including the steps of: (i) receiving, from a reader, a first message including first resource assignment information and a second message including second resource assignment information, and (ii) determining at least one resource assigned to the IoT device for scheduling signal transmission from the IoT device, wherein the at least one assigned resource is determined based on the first resource assignment information and the second resource assignment information.

According to an optional implementation, the process further includes one or a combination of the steps performed by the IoT device of any of the first to twelfth aspects.

According to a seventeenth aspect, there is provided an integrated circuit for controlling a process of a reader, the process including the steps of: (i) assigning at least one resource to an Internet of Things, IoT, device, for scheduling signal transmission from the IoT device, (ii) generating a first message including first resource assignment information and a second message including second resource assignment information, wherein at least one of the first resource assignment information and the second resource assignment information indicate the at least one assigned resource to the IoT device; and (iii) transmitting the first message and the second message to the IoT device.

## Claims

1. An Internet of Things, loT, device comprising:
a transceiver, which in operation, receives, from a reader, a first message including first resource assignment information and a second message including second resource assignment information; and
circuitry, which in operation, determines at least one resource assigned to the loT device for scheduling a signal transmission from the loT device,
wherein the circuitry, in operation, determines the at least one assigned resource based on the first resource assignment information and the second resource assignment information.

2. The loT device according to claim 1, wherein the first resource assignment information indicates at least one frequency resource assigned to a group of loT devices and the second resource assignment information includes signal trigger information; and
wherein the circuitry, in operation, identifies the at least one assigned frequency resource by using the first resource assignment information and determines a transmission time of the signal transmission based on the signal trigger information;
optionally, wherein the signal trigger information indicates an offset time between the reception time of the second message and the transmission time of the signal transmission;
optionally, wherein the signal trigger information indicates a signal trigger identifier.

3. The loT device according to one of claims 1 and 2, wherein the first resource assignment information indicates a first part of frequency resources assigned to a group of loT devices and the second resource assignment information indicates a second part of frequency resources assigned to the group of loT devices for the signal transmission, and
wherein the circuitry, in operation, identifies the at least one assigned resource among the first part of frequency resources and/or among the second part of frequency resources.

4. The loT device according to claim 3, wherein the transceiver, in operation, receives a third message including signal trigger information; and
wherein the circuitry, in operation, determines the transmission time of the signal transmission based on the signal trigger information;
optionally, wherein the third message is received after the first message and the second message.

5. The loT device according to claim 3, wherein the second resource assignment information includes signal trigger information; and
wherein the circuitry, in operation, determines the transmission time of the signal transmission based on the signal trigger information.

6. The loT device according to one of claims 1 to 5, wherein the first message and the second message include a common message identifier;
optionally, wherein the third message includes the common message identifier.

7. The loT device according to one of claims 1 to 6, wherein the first message is received before the second message and wherein the first message includes trigger message identification information indicating a trigger message identifier;
wherein the signal trigger information includes the trigger message identifier; and
wherein the circuitry, in operation, identifies the trigger message identifier based on the trigger message identification information.

8. The loT device according to one of claims 1 to 6, wherein the first message is received before the second message and wherein the first message includes a signal trigger indication indicating whether or not the first message includes the signal trigger information; and
wherein the circuitry, in operation, if the signal trigger indication indicates that the first message does not include signal trigger information, determines the transmission time of the signal transmission based on the second message.

9. The loT device according to one of claims 1 to 7, wherein the first message is received before the second message, and wherein the second message includes a signal trigger indication indicating whether or not the second message includes the signal trigger information; and
wherein the circuitry, in operation, if the signal trigger indication indicates that the second message includes signal trigger information, determines the transmission time of the signal transmission based on the second message.

10. The loT device according to one of claims 1 to 6, wherein the first message is received before the second message; and
wherein the circuitry, in operation, if the second message is received within an offset time starting from the reception time of the first message, determines that the transmission time of the signal transmission is based on the second message;
optionally, wherein the first message includes signal trigger information, which indicates the offset time;
optionally, wherein the offset time is pre-obtained by the circuitry.

11. The loT device according to one of claims 1 to 10, wherein the circuitry, in operation, obtains a resource assignment rule, which includes at least one trigger condition for triggering the signal transmission; and
wherein the determining of the at least one assigned resource includes determining whether or not the at least one trigger condition is fulfilled; and
optionally, wherein the at least one trigger condition defines a minimum delay time after the reception of the first message;
optionally, wherein the at least one trigger condition defines a minimum delay time after the reception of the second message;
optionally, wherein the at least one trigger condition defines a reception of a minimum number of resource assignment messages including resource assignment information;
optionally, wherein the at least one trigger condition defines a signal transmission triggering coding rate.

12. The loT device according to one of claims 1 to 11, wherein the signal transmission includes a plurality of transmission messages, and wherein the circuitry, in operation, determines at least one common frequency resource for the plurality of transmission messages.

13. A reader comprising:
circuitry, which in operation,
- assigns at least one resource to an Internet of Things, oT, device, for scheduling signal transmission from the loT device; and
- generates a first message including first resource assignment information and a second message including second resource assignment information, wherein at least one of the first resource assignment information or the second resource assignment information indicate the at least one assigned resource to the loT device; and
a transceiver, which in operation, transmits the first message and the second message to the loT device.

14. A method performed by an loT device, the method comprising the steps of:
- receiving, from a reader, a first message including first resource assignment information and a second message including second resource assignment information; and
- determining at least one resource assigned to the loT device for scheduling signal transmission from the loT device,
wherein the at least one assigned resource is determined based on the first resource assignment information and the second resource assignment information.

15. A method performed by a reader, the method comprising the steps of:
- assigning at least one resource to an Internet of Things, loT, device, for scheduling signal transmission from the loT device;
- generating a first message including first resource assignment information and a second message including second resource assignment information, wherein at least one of the first resource assignment information and the second resource assignment information indicate the at least one assigned resource to the loT device; and
- transmitting the first message and the second message to the loT device.
